# EUROPEAN PATENT SPECIFICATION

(11) **EP 0 297 891 B1**
(45) Date of publication and mention of the grant of the patent: **22.02.1995**
(21) Application number: 88305989.1
(22) Date of filing: 30.06.1988
(51) Int. Cl.: G06F 12/14, G06F 9/46

(54) **Apparatus and method for main memory unit protection using access and fault logic signals**
Vorrichtung und Verfahren für den Hauptspeicherschutz mit Verwendung von Zugriffs- und logischen Fehlersignalen
Dispositif et méthode pour la protection de l'unité de mémoire centrale utilisant des signaux d'accès et des signaux d'erreurs logiques

(30) Priority: 01.07.1987 US 69290
(43) Date of publication of application: 04.01.1989
(73) Proprietor: DIGITAL EQUIPMENT CORPORATION, Maynard Massachusetts 01754-1418 (US)
(72) Inventor: Cutler, David N., Bellevue Washington 98004 (US); Orbits, David A., Redmond Washington 98052 (US); Bhandarkar, Dileep, Shrewsbury Massachusetts 01545 (US); Cardoza, Wayne, Merrimack New Hampshire 03054 (US); Witek, Richard T., Littleton Massachusetts 01460 (US)
(74) Representative: Goodman, Christopher

(56) References cited:
- COMPUTER, vol. 20, no. 3, March 1987, pages 48-67, New York, US; B. FURHT et al.: "A survey of microprocessor architectures for memory management"
- ELECTRONIQUE INDUSTRIELLE (SUPPL.), no. 13, June 1987, pages 48-53, Paris, FR;N. PRAWITZ: "Deux microprocesseurs a unites specialisees les V60 et V70 pour un environnement de langage haut niveau"
- WESCON TECHNICAL PAPERS, 30 octobre - 2 novembre 1984, paper 17/2, pages 1-7,Anaheim, Los Angeles, CA, US; K.B. WALLACE: "UNIX * and the series 32000"

## Description

### 1. Field of the Invention

This invention relates generally to data processing systems and, more particularly, to the control of the instruction and data elements that are processed by the data processing system.

### 2. Description of the Related Art

In data processing systems, the data elements that are manipulated by the data processing system, as well as instruction elements forming a program controlling the manipulations, are typically stored in a main memory unit. The main memory unit can store instruction and data elements associated with a multiplicity of programs being executed by the data processing system. For a variety of reasons, such as integrity of the instruction and data elements, it is frequently desirable to control the type of manipulation to which the instruction and data elements can be subjected. For example, inconsistent results can occur when a user of the data processing system can cause the fundamental portions of the operating system program or selected subroutines to be altered.

In the past, a variety of techniques have been used to control the type of manipulation to which a logic signal group can be subjected. A field (or fields) can be associated with each logic signal group that designates the intended use of the associated instruction or data element. Because of the variety of access rights that can be assigned to the instruction or data element, only a subset of all possible access rights to the associated instruction or data elements can be assigned without the requisite access rights fields becoming excessively large. This problem is addressed in a somewhat different manner by the Multics (Multiplexed Information and Computing Service) system in which a multiplicity of privilege levels are defined for the operation of the data processing system and transfer between these levels is rigidly controlled. The Multics system is described in "The Multics System; An Examination of its Structure" by Elliott I. Orgnick, published by MIT Press. The Multics system and similar data processing systems require elaborate hardware/software privilege level interfaces that typically involve a large amount of processing time to implement. Access rights associated with Multics system are defined for each level of privilege and must be examined for consistency when passing between privilege levels.

A need has therefore been felt for a technique for controlling the manipulation of instruction and data elements that has sufficient flexibility to provide for the available processing options without requiring a large amount of dedicated processing capability or, without requiring relatively large access rights fields to be associated with each instruction or data element. An apparatus as well as a method of the type specified in the precharacterising part of claims 1 and 20 is for example known from the document : Computer, vol.20, March 1987, No. 3, NY USA, pages 48-67; Borivoje Furht et al: "A survey of Microprocessor Architectures for Memory Management.

### FEATURES OF THE INVENTION

It is an object of the present invention to provide and improved data processing unit.

It is a feature of the present invention to control the type of manipulation to which program instruction and data elements can be subjected.

It is a more particular feature of the present invention to provide control of the access rights to instruction or data elements by storing access rights signals in the page table entry.

It is another particular feature of the present invention to make the read/write access to the data processing system memory a function of the mode of operation of the data processing system.

It is yet another particular feature of the present invention to limit the usage of an instruction element to an "execute only" usage.

It is still another particular feature of the present invention to prohibit the data processing unit from attempting to execute data (i.e., non-instruction) fields.

It is yet another feature of the present invention to provide a mechanism for signaling when a valid "read", "write" or "execute" operation is being attempted.

### SUMMARY OF THE INVENTION

The aforementioned and other features are accomplished, according to the present invention as claimed, by providing apparatus for accessing page table entry fields, when the central processing unit attempts to access data in the associated page, that define the processing that can be performed on the instruction and data elements comprising the page of information. The page table entry access rights fields include enable signals for read and write operations in a user mode of operation (wherein nonprivileged instructions can be executed) and enable signals for read and write operations by a kernel mode of operation (wherein privileged and nonprivileged instructions can be executed). In addition, the page table entry access rights fields permit fault on execute, fault on write, and fault on read signals to be specified. These signals permit an instruction element to be designated as an execute only field, a data element to be designated as no-execute, and provide a means for collecting access and modify information.

These and other features of the present invention will be understood upon reading of the following description along with the drawings.

### BRIEF DESCRIPTION OF THE DRAWINGS

Figure 1A and Figure 1B are examples of data processing system implementations capable of using the present invention.

Figure 2 is an example of a central processing unit of a data processing unit capable of using the present invention.

Figure 3 is an illustration of a virtual memory data processing system organization.

Figure 4A is a page table entry format according to the preferred embodiment.

Figure 4B illustrates the testing of the page table entry fields to determine if access to associated page table is permitted.

Figure 5 illustrates the indirect addressing technique utilizing the present invention.

### DESCRIPTION OF THE PREFERRED EMBODIMENT

### 1. Detailed Description of the Figures

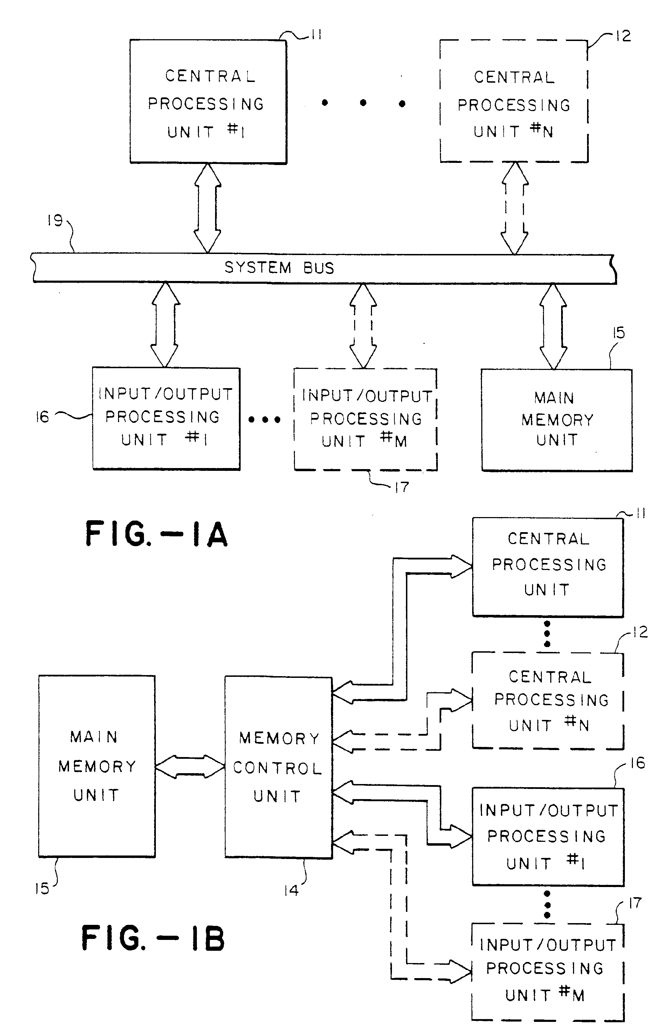

Referring now to Fig. 1A and Fig. 1B, two exemplary data processing system configurations capable of using the present invention are shown. In Fig. 1A, the central processing unit (#l) 11 is coupled to a system bus 19. Other central processing units (e.g., #N) 12 can also be coupled to the system. The central processing unit(s) 11 (through 12) process data according to the structure of the central processing unit(s) in conjunction with central processing unit control programs, the control programs being comprised of instructions resident in the main memory unit 15. The nonresident data and instructions are typically stored in the mass storage unit(s) and are transferred to and from the main memory unit 15 via the system bus 19. Input/output unit(s) {#l} 16 (through {#M} 17) couple devices such as mass memory storage units, user terminal devices and communication devices to the data processing system by means of the system bus 19. The mass storage units store the data and instructions required by the data processing unit(s). Sets of data and/or instructions, typically designated as pages of data and/or instructions, required for the operation of the central processing units 11 through 12, are transferred from the mass storage units, having relatively slow accessibility, to the main memory unit to which access by the central processing unit is relatively fast. The bus oriented system has an advantage in the relative ease to reconfigure the system but has the disadvantage that each system component requires control apparatus to provide an interface with the system bus. Referring next to Fig. 1B, a data processing system is shown in which the central processing unit(s) 11 (through 12) and the input/output unit(s) 16 (through 17) are coupled to the main memory unit 15 through a memory control unit 14, the memory control unit 14 replacing the system bus 19 and the control function performed by individual data processing system components in the bus oriented data processing configuration shown in Fig. 1A. The memory control unit 14 provides a centralized control and monitoring of the transfer of data and instructions that can be more efficient than the bus oriented configuration of Fig. 1A, but with the loss of flexibility.

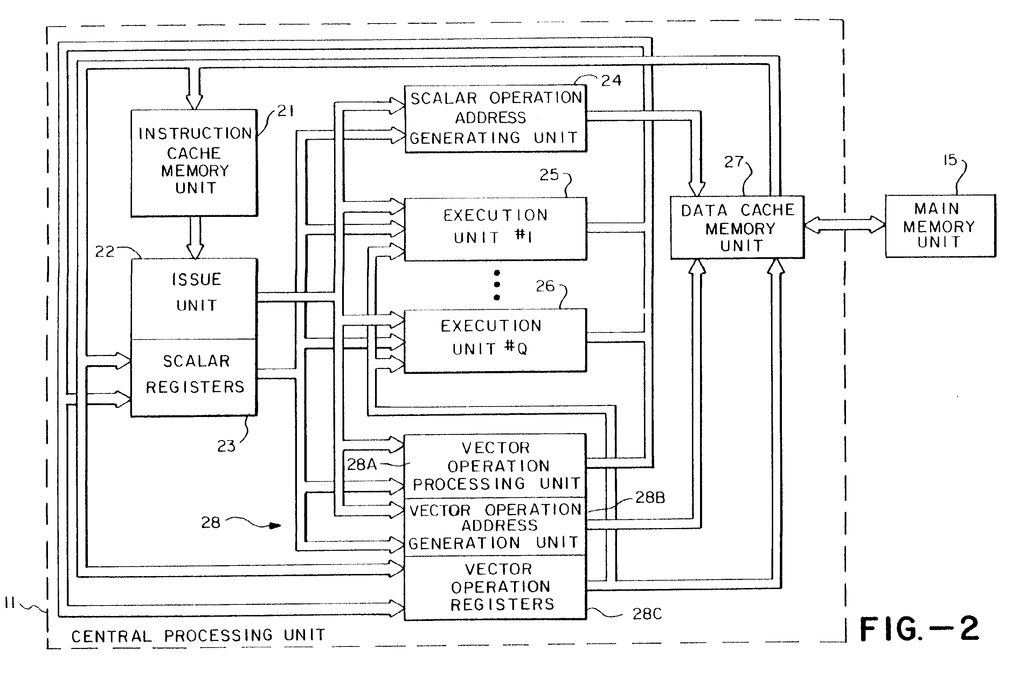

Referring next to Fig. 2, a block diagram of an exemplary central processing unit capable of effective utilization of the present invention is illustrated. The issue unit 22 is responsible for for providing (decoded) instructions to the plurality of specialized execution units comprising scalar operation address generation unit 24, at least one execution unit (#l) 25 (through execution unit (#Q) 26) and a vector operation unit 28, the vector operation unit 28 including vector operation processing unit 28A, vector operation address generation unit 28B and vector operation registers 28C. The data processed by the execution units are typically extracted from the scalar registers 23 or the vector registers 28C. The resulting data from the execution units are stored in the scalar registers 23, in the vector registers 28C or in the data cache memory unit 27. The data cache memory unit 27 can be viewed as a cache memory unit providing an interface between the main memory unit 15 and the central processing unit 11. (The data cache memory unit 27 is shown as being coupled directly to the main memory unit in Fig. 2. As illustrated in Fig. 1A and Fig. 1B, the actual coupling can include intervening data processing apparatus.) The issue unit 22 includes apparatus for determining which execution unit will process selected data and for determining when the selected execution unit is available for processing data. This latter feature includes ascertaining that the destination storage location will be available to store the processed data. The instruction cache memory unit 21 stores the instructions that are decoded and forwarded to the appropriate execution unit by the issue unit. The issue unit 22 has the apparatus to attempt to maximize the processing operations of the execution units. Thus, the issue unit 22 includes prefetch apparatus and algorithms to ensure that the appropriate instruction (including any branch instruction) is available to the issue unit 22 as needed. The plurality of execution units are, as indicated by the scalar operation address generation unit 24 and the vector operation unit 28, specialized processing devices for handling certain classes of processing operation. For example, an execution unit can be configured to handle floating point operations, integer arithmetic operations, etc. The issue unit 22 has associated therewith scalar registers 23 that can store data required for the execution of the program or for providing a record of the data processing operation. For example, one register is the Program Counter register that stores the (virtual) address of the next instruction, in the executing program instruction sequence, to be processed. The scalar operation address generation unit 24 is used to convert virtual addresses to physical locations in the main memory unit 15. The issue unit 22 is also responsible for reordering the data from the execution units in the correct sequence when the execution units process instructions at different rates.

The vector operation unit 28 includes a vector operation processing unit 28A, a vector operation address generation unit 28B, and vector operation registers 28C. The activity of the vector operation processing unit can control the distribution of the data to the execution units 24 through 26 and the execution of the instructions therein. According to another embodiment (not shown), execution units dedicated to execution of instructions by the vector operation unit 28 can be available in the data processing system. When the execution units are available for both vector and scalar operations, control is subject to the overall system control of the issue unit 22 that allocates the resources of the data processing unit.

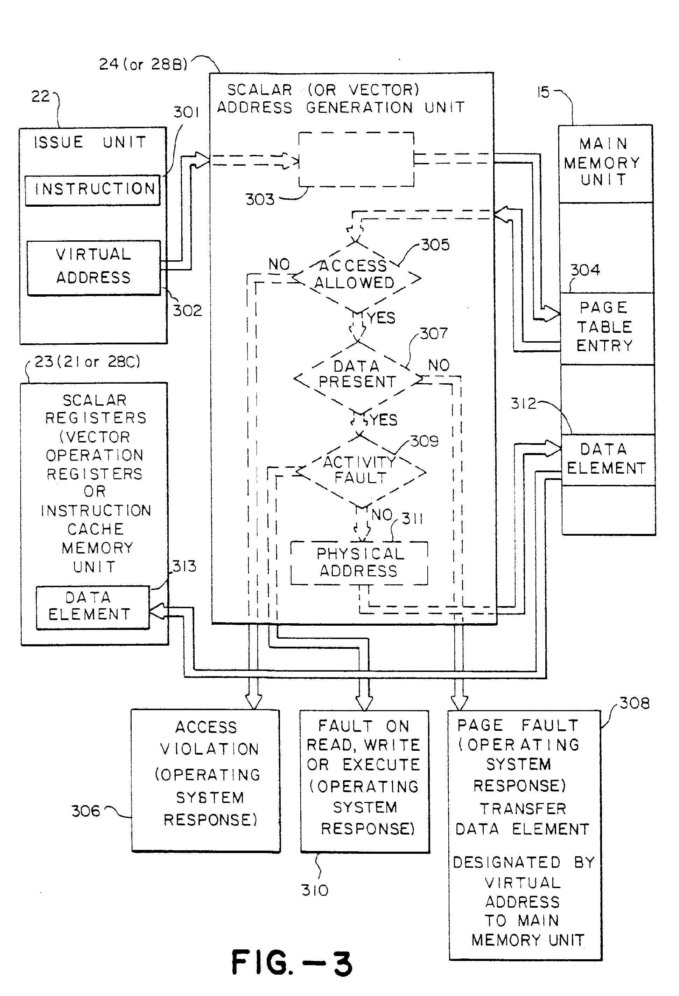

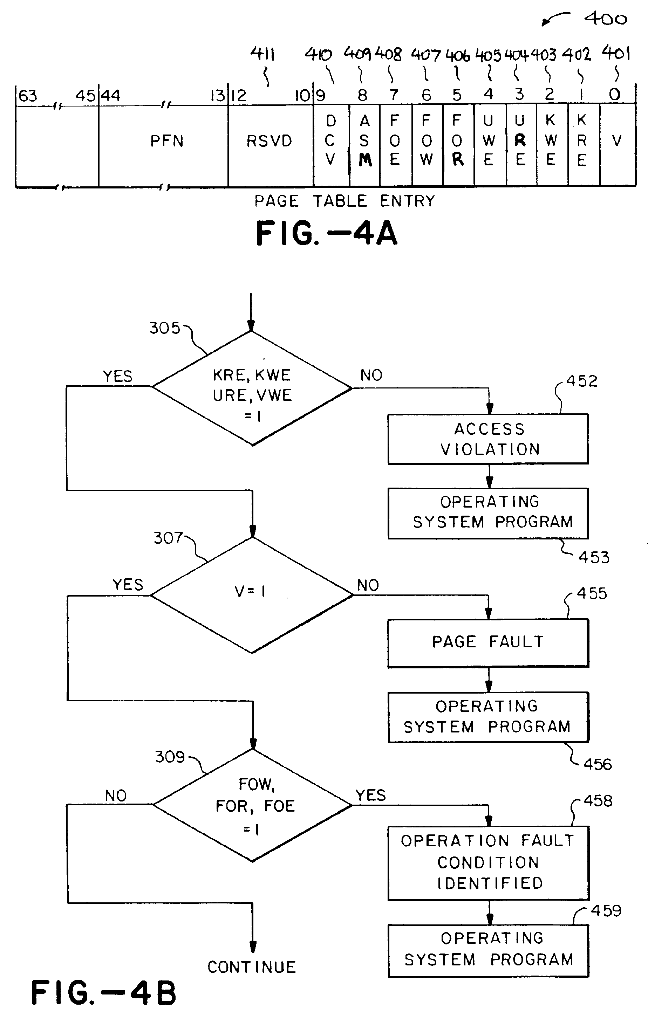

Referring next to Fig. 3, a description of the virtual addressing mechanism of the preferred embodiment is illustrated. An instruction 301 in the issue unit has associated therewith a virtual address 302 identifying the data element upon which the operation of the instruction is to be performed. The issue unit transfers the virtual address 302 to scalar address generation unit 24 (or, where appropriate, the vector address generation unit 28B). In the address generation unit 24 (or 28B) a portion of the virtual address is used to identify (by apparatus 303 in the address generation unit) a page table entry 304 in main memory unit 15. The page table entry 304 is transferred to the address generation unit 24 (or 28B), and test 305 tests selected fields in the page table entry to determine if the access being attempted with respect to the data element is permitted. When the access is not permitted, then an access violation 306 is identified and an appropriate operating system program is invoked to determine how to respond to the access violation. When the test 305 determines that the access to data element 312 is permitted, then a test 307 is performed on page table entry 304 to determine if the data element required for the instruction is available in the main memory unit 15. When the test 307 indicates that the data element is not present, then a page fault 308 is generated and an appropriate operating system program is invoked to transfer the data element to the main memory 15 (in location 312). If the required data element is available in the main memory unit as determined by test 307, test 309 tests the page table entry 304 to determine if the activity for which the data element is required by the associated instruction is designated as resulting in a fault. When the activity determined by the instruction is designated as a fault condition, then a fault on read, a fault on write, or a fault on execute will invoke an operating system program to respond to the fault condition. If the test 309 indicates that the activity of the instruction with respect to the associated data element is not designated as a fault condition, the address generation unit 24 (or 28B) determines the physical address 311 in the main memory unit 15 where the required data element is stored. The data element 312 at this address is transferred to a storage location 313 in the scalar registers 23, the vector operation registers 28C, or to the instruction cache memory unit 21 (i.e., when the data element is an instruction). In this manner, the required data element, identified by a virtual address, is available for processing by the instruction 301.

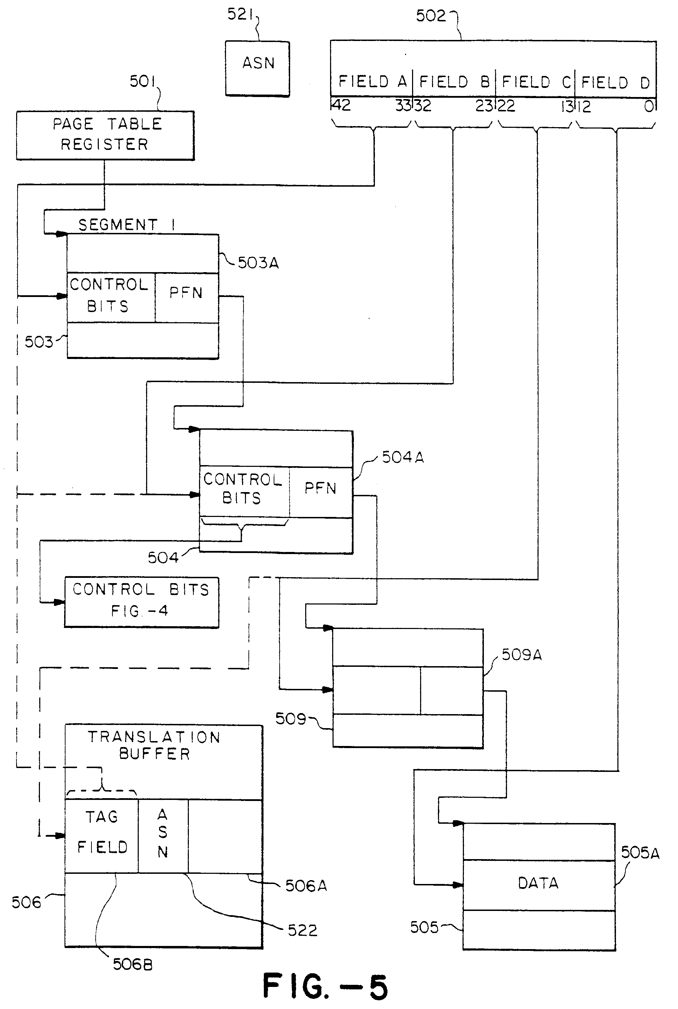

Referring to Fig. 4A, the page table entry 400 used to translate the virtual addresses to the physical addresses is shown. The field V (Valid) in the 0 bit position 401 indicates the validity of the DCV, ASM, FOE, FOW, FOR and PFN fields. When the valid bit is set, these fields are valid for use by the hardware apparatus. When this bit is clear, then the PFN (Page Frame Number) field is reserved for use by the operating system program. The field KRE (Kernel Read Enable) in the bit 1 position 402 enables reads when the central processing unit is in the privileged or kernel mode. When this bit is zero and a data read operation or an instruction fetch is attempted in kernel mode, an Access Violation exception occurs. The field KWE (Kernel Write Enable) in the bit 2 position 403 enables write operations when the central processing unit is in the privileged or kernel mode. When this bit is zero and a data write operation is attempted in kernel mode, an Access Violation exception occurs. The URE (User Read Enable) field in bit 3 position 404 enables read operations when the central processing unit is in a nonprivileged or user mode. When this field is zero and a data read operation or instruction fetch is attempted while the central processing unit is operating in the user mode, an Access Violation exception occurs. The UWE (User Write Enable) field in the bit 4 position 405 enables write operations from the nonprivileged or user mode. When this field is zero and a data write operation is attempted in the URE mode, and Access Violation exception occurs. The KRE, KWE, URE and UWE fields are valid even when the V field is zero. The FOR (Fault On Read) field in the bit 5 position 406, when set to logic one, results in a Fault on Read exception when an attempt is made to read any location (i.e., a LOAD instruction reading data from a location on the page) from the associated page. The FOW (Fault On Write) field in the bit 6 position 407, when set to a logic one, results in a Fault on Write exception when an attempt is made to perform a write operation (i.e. STORE instruction writing data to a location on the page) to any location in the associated page. The FOE (Fault On Execute) field in the bit 7 position 408, when set to a logic one, results in a Fault on Execute when an attempt is made to execute an instruction from the associated page. The ASM (Address Space Match) field in the bit 8 position 409 signifies that all Address Space Numbers (ASNs) match in attempted accesses to the associated page (i.e. ASN is not used in the translation buffer by the comparators). The DCV (Don't Cache Virtual) field in the bit 9 position 410, when set to a logic one, prohibits the contents of the associated page from being stored in a virtual cache. The field in the bit 10-12 positions 411 is reserved for future use. The PFN (Page Frame Number) field in bit 13-44 positions contain the page frame number. The PFN field always points to a physical page frame boundary. When the V field 401 is set, the Byte within Page (i.e., displacement) bits from the virtual address are concatenated with the PFN field to form the physical address used by the hardware apparatus.

Referring next to Fig. 4B, the testing of the page table entry fields, shown generally in Fig. 3 as tests 305, 307 and 309, are illustrated in terms of page table entry fields identified in Fig. 4A. In test 305, the access rights associated with the page table entry is compared with the access parameters of the instruction attempting to access a data element within the page to determine whether the intended access is allowed. In particular, the KRE, the KWE, the URE and the UWE fields (i.e., fields 402 through 405) are compared with the mode of operation of the data processing system and with the access activity (i.e., a read or a write operation) to determine if the access is permitted. When the access is not permitted, an access violation 452 is identified and an appropriate operating system program 453 is invoked. In test 307, the validity bit V (i.e., field 401) is tested to determine if valid data is stored in the page of data and/or instructions associated with the virtual address. When valid data is not associated with the page of data elements, then a page fault 455 is identified and an appropriate operating system program 456 is invoked. The appropriate operating system response in this situation is to move the page of data elements to the main memory unit from the backing store and to re-execute the instruction that incurred the page fault. With respect to test 309 of Fig. 3, the page table fields FOR (Fault on Read), FOW (Fault on Write) and FOE (Fault on Execute), i.e., fields 406 through 408, are tested against parameters of the associated instruction to determine if the attempt to perform the instruction operation on a data element of the page of data elements should result in a fault condition. If a fault condition is identified 458, an operating system program 459 is invoked. Otherwise, the physical address is generated.

Referring next to Figure 5, the indirect address translation technique, with which the present invention is utilized, is illustrated. The determination of a physical address is performed in the scalar operation address generation unit 24 or in the vector operation address generation unit 28B of Fig. 2. The contents of the page table base register 501 and the address space number register 521 are stored in the scalar operation address generation unit 24 and in the vector operation address generator unit 28B of Fig. 2. To obtain a data element (i.e., data element 505A) corresponding to a virtual address, the virtual address of the data is entered into the scalar operation address generation unit 24 or the vector operation address generation unit 28B of Fig. 2. The contents of page table base address register 501 are interpreted as a starting location in a set of data groups segment 1, 503, and the highest order 10 bits (Field A) of the virtual address 502 are interpreted as an index in the segment 1, 503. The data group 503A is identified by this operation and this data group (503A) is transferred to the scalar operation address generation unit 24 or the vector operation address generation unit 28B of Fig. 2. The PFN (Page Frame Number) portion of data group 503A is used as the base address of the set of data groups labelled as segment 2, 504. Field B (i.e., the next 10 bits of the virtual address 502) is used as the index value for segment 2 to obtain the data element 504A of segment 2, 504. The data group 504A is transferred to scalar address generation unit 24 or the vector operation address generation unit 28B of Fig. 2. Included in the data group 504A are the access control bits that are described with reference to Fig. 4. These access control bits are checked at this time and, where appropriate, a designated exception is generated. (In the preferred embodiment, the access control bits associated with segment 1 and segment 2 are also tested, but only for kernel read access). In addition, the V field may be checked at the segment 1 or segment 2 level to determine if the page table page at the segment 2 or segment 3 level is resident in main memory.) The PFN portion of data element 504A is used to determine the base address of segment 3, 509. Field C (i.e., the next 10 bits of the virtual address) is used as the index value of segment 3, along with the base address of the PFN field 504A of segment 2, to obtain the address of the data group 509A. Finally, the PFN of the data group 509A references the base address of the data page 505. The least significant 13 bits of virtual address 502 (Field D) determine an offset in the data page 505 and identify data group 505A, the data group identified by the virtual address. To eliminate two stages of memory reference in the foregoing procedure, a translation buffer 506 can be provided in scalar operation address generation unit 24 and/or the vector operation address generation unit of Fig. 2. According to one embodiment, the Field C (10 bits) of the virtual address can be used to identify a location in the translation buffer. A tag field of the addressed location is compared with the 20 bit Field A and Field B of the virtual address 502 to establish the correctness of the identification. The data group 504 A is stored in the translation buffer and can be used by the scalar or vector operation address generation unit. An address translation buffer can be implemented in other ways to expedite address translation. In addition to the 20 Field A and Field B bits, the translation buffer tag field has associated therewith an Address Space Number (ASN) 522. If the ASM bit from the data group 504A is set to 1, then a match between the 20 Field A and Field B bits from the virtual address with the 20 Field A and Field B tag bits is sufficient to identify a correct translation. If, however, the ASM bit from the data group 504A is zero, then not only do the 20 Field A and Field B bits from the virtual address have to match the 20 bit tag field, but also the current ASN 521 must match the field 522 from the translation buffer.

### 2. Operation of the Preferred Embodiment

The central processing unit having pipelined execution units of Fig. 2 was implemented in the preferred embodiment subject to several constraints; however, other design implementations can utilize the present invention. The central processing unit includes a plurality of execution units, each adapted to execute a class of instructions. By way of example, one execution unit, the scalar address generating unit 24, controls the transfer of the data elements between the central processing unit and the main memory unit, i.e., executes the scalar load/store instructions. One execution unit is adapted to execute data shifting operations, one execution unit for floating point add/subtract operations, one execution unit is adapted for integer and floating point multiply operations, and one execution unit is adapted for integer and floating point divide operations. The specialized execution units can be, but are not necessarily implemented in a pipelined configuration. The other features of the central processing unit are the following. The instruction in the currently executing sequence of instructions is transferred to the issue unit 22 from the instruction cache memory unit 21. In the issue unit, the instruction is broken down into its constituent parts and data-dependent control signals and address signals are generated therefrom. However, before an instruction can begin execution (i.e., be issued), several constraints must be satisfied. All source and destination registers for the instruction must be available, i.e. , no write operations to a needed register can be outstanding. The register write path must be available at the future cycle in which this instruction will store the processed quantity. The execution unit to be required for processing the instruction during the execution must be available to perform the operation. With respect to the vector operation unit, a vector operation reserves an execution unit for the duration of the vector operation. When a memory load/store instruction experiences a cache memory unit miss, the load/store unit busy flag will cause the subsequent load/store instructions to be delayed until the cache memory miss response is complete. When an instruction does issue, the destination register and the write path cycle for the result are reserved. During operand set-up, all instruction-independent register addresses are generated, operands are read and stored, and data-dependent control signals are generated. The instruction operands and control signals are passed to the the associated execution unit for execution. The result generated by the execution unit is stored in the register files or in the data cache memory unit 15 as appropriate. Once an instruction issues, the result of the processing may not be available for several machine cycles. Meanwhile, in the next machine cycle, the next instruction can be decoded and can be issued when the requisite issue conditions are satisfied. Thus, the instructions are decoded and issued in the normal instruction sequence, but the results can be stored in a different order because of the of the varying instruction execution times of the execution units. This out of order storing complicates the exception handling and the retry of failing instructions. However, these events are relatively rare, and the out of order storing provides execution and hardware advantages.

With respect to Fig. 3, the use of virtual addressing techniques has been widely implemented. This technique permits the programmer to be unconcerned with actual location of the data and instruction elements, the address generation mechanism providing an interface between the program addresses and the data and instruction elements within the data processing unit. By the use of pages of data and instruction elements, the transfer of data and instruction elements from the bulk or mass store media is expedited, there being no need to transfer individual data and instruction elements. In addition, programs are generally written in a format that stores data and instruction elements needed for sequential instruction execution relatively close together in the program or file. Thus, a page of data and instruction elements will typically include a multiplicity of related data and instruction elements for program execution. None-the-less, the relative rigidity of the granularity of the page implementation has the result, particularly in the vector instruction execution, that the group of related data and instruction elements can extend beyond the page boundary to a page not present in the main memory unit of the data processing system. In the preferred embodiment, the address generation mechanism 34 includes apparatus portions for address translation and for generating an exception (i.e., test 307) when the required page of information is not in the main memory unit 15 and includes a software program portion as part of the operating system for transferring pages of information between the bulk storage apparatus and the main memory unit. The address generation mechanism 34, when a page of data and instruction elements is transferred into the main memory unit 15, provides associated page table entries in main memory 15 wherein the currently executing program can identify all the pages of data and instruction elements (associated with virtual addresses) stored in the main memory unit 15 and can therefore signal a page fault when the referenced data or instruction element is not in main memory unit 15. As shown in Fig. 3, the data processing unit typically includes procedures associated with the virtual addressing technique such as the apparatus for signaling that the required information page is not in the main memory unit, as well as the programs for responding to a page fault by retrieving the missing page of information.

The operating system changes the page table entries as part of the memory management function. The operating system can set or clear the valid bit, change the page frame number field as the pages are moved to and from external storage media or modify the software bits.

The present invention is directed to validating that a particular type of access is permitted to a specific set of information from a particular access mode. Access to each set of information (i.e., page) is controlled by a protection code that specifies, for each access mode (kernel or user), whether read or write references are allowed. The central processing unit has available the following information to control an attempted access. The virtual address used to index page tables, the intended access type (i.e., read data, write data or instruction fetch) and the current access mode (from the Processor Status register) are available to define the status of the central processing unit. When the access to the page table is permitted (i.e., the page table entry is consistent with the intended access type central processing unit status), then a virtual address can be made to correspond to a physical address.

In the preferred embodiment, every page in the virtual address space is protected according to its use. A program can therefore be prevented from reading from or writing into portions of its address space. Associated with each page is a protection code that describes the accessibility for each mode of operation of the data processing system. The code implementation permits a choice of read or write protection for each mode of the central processing unit. Each processing unit mode can be read/write, read-only or no access. The read and write accessibility are specified independently. The protection mode of each mode can be specified independently. A page can be designated as execute only by setting the read enable bit for the access mode and by setting the fault on read and the fault on write fields in the page table entry. The fault on execute mode along with the appropriate access signals can prevent the data processing system from attempting to execute data elements.

Specifically, the scalar and vector operation address generation units have available information describing the particular operation for which the data group is being requested. With information regarding the accessibility of the data group as well as the operation for which the data group was intended, the following protections are available:
1. Access Protection (UWE, URE, KWE, KRE)
2. Modified Data (UWE, KWE, FOW. An attempted write results in the apparatus operating system program, which sets a software defined modify bit, being entered.)
3. Copy or Modify (UWE, KWE, FOW. An attempted write results in operating system program being entered which copies the page.)
4. Read Only (URE, KRE, FOW, FOE)
5. Write Only (UWE, KWE, FOR, FOE)
6. Execute Only (URE, KRE, FOR, FOW)
7. Protected Entry to Operating System (URE, KRE, FOR, FOE)

The ASM (Address Space Match) field provides a bit that when set, permits the selected address in the translation buffer to be used when the translation buffer location tag field is consistent with the virtual address. When the ASM field is not set, then an additional field, the ASN field associated with both the translation buffer location and the virtual address must be identical.

In some applications it can be useful to associate an address in cache memory with the virtual address rather than with the physical address. In certain situations, the use of virtual addresses by the cache memory unit can lead to erroneous data group identifications (a physical address with more than one virtual address mappings). The DCV bit position determines whether data associated with a virtual address is allowed to be associated with the cache memory using virtual addressing.

The foregoing description is included to illustrate the operation of the preferred embodiment and is not meant to limit the scope of the invention. The scope of the invention is to be limited only by the following claims.

## Claims

1. Apparatus for controlling access to and use of stored elements (312) by a processor (11) of the kind that requests said access by identifying one of said elements and indicating one of a set of uses for said one element, said apparatus comprising:
a memory (15) that includes a plurality of regions each of which stores multiple said elements (312),
storage for a plurality of records (304) each of which corresponds to one of said regions and includes:
access information (KRE,KWE,URE,UWE) that defines access rights to said one region, and
use information (FOR,FOW,FOE) that designates one or more of said set of uses for the elements stored in said one region,
characterized by:
a controller (303) for responding to one of said requests by using the record (304) that corresponds to the region in which the element identified in the request is stored to:
selectively grant said processor (11) access to said region based on said access information, and
if said access is granted, regulate use of said element by said processor based on said use information and the use indicated in the request.

2. The apparatus of claim 1 wherein said processor (11) has a plurality of modes of operation, said access information (KRE,KWE,URE,UWE) defining, for each of said modes, whether said processor is permitted access to said region, said controller being adapted to deny said request and generate an access violation (452) unless the operating mode of said processor is one which said information defines as a mode for which access to said region is permitted.

3. The apparatus of claim 2 wherein said controller is adapted to deny said request regardless of the use indicated in said request unless the operating mode of said processor is one which said information defines as a mode for which access to said region is permitted.

4. The apparatus of claim 1 wherein said use information (FOR,FOW,FOE) can designate none, some, or all of said uses, said controller being adapted to invoke an exception routine if said use indicated in the request is different from the use designated by said use information.

5. The apparatus of claim 4 wherein said exception routine causes said processor to be denied the use indicated in the request.

6. The apparatus of claim 4 wherein said exception routine allows said processor to perform the use indicated in the request but causes an operating system to be informed that said use indicated in the request has been attempted.

7. The apparatus of claim 1 wherein said elements comprise different types of elements and said use information (FOR,FOW,FOE) designates said one or more of said set of uses based on said element types, said controller regulating said use of said element identified in each said request by selectively granting or denying the use indicated in the request based on the type of said identified element and said use information.

8. The apparatus of claim 7 wherein said types of elements include data elements and instruction elements, said controller being adapted to deny the use indicated in the request if the element identified in the request is an instruction element unless the use indicated in the request is execution.

9. The apparatus of claim 1 wherein said regions comprise pages of a virtual memory.

10. The apparatus of claim 9 wherein each one of said records (304) comprises a page table entry (400) for a page to which said record corresponds, said access information (KRE,KWE,URE,UWE) and said use information (FOR,FOW,FOE) being included in fields (402-408) of said page table entry (400).

11. The apparatus of claim 1 wherein said processor (11) is adapted to selectively operate in a user mode or a kernel mode, said access information (KRE,KWE,URE,UWE) defining said access rights for each one of said modes, said controller selectively granting said access to said stored elements according to the mode in which the processor is operating and said access information for said mode.

12. The apparatus of claim 1 wherein said stored elements include instruction elements and one of said set of uses is execution, said controller being adapted to respond to one of said requests that identifies an instruction element by using said use information to prevent said processor from using said instruction element unless the use indicated in said request is execution.

13. The apparatus of claim 1 wherein said processor (11) includes a cache memory unit (27) said apparatus further comprising an address controller responsive to address information in each one of said records for addressing elements in said cache memory unit.

14. The apparatus of claim 1 wherein said processor (11) generates a plurality of virtual addresses (502) for said elements and a first address space number associated with each of said virtual addresses, said apparatus further comprising:
a translation buffer (506) for translating said virtual addresses to physical addresses, said translation buffer having a second address space number corresponding to each virtual address to be translated; and
a comparator which compares, for each virtual address to be translated by said translation buffer, said first address space number corresponding to said virtual address with the corresponding said second address space number in response to address space number information in said record, said translation buffer being utilized to translate a virtual address only if said comparator determines that corresponding first and second address space numbers are identical.

15. The apparatus of claim 1 wherein said record (400) includes information (DCV) that identifies whether the elements in the region corresponding to said record may be stored in a virtual cache.

16. The apparatus of claim 1 wherein said controller is adapted to inform an operating system if one of said requests indicates a selected one or more of said set of uses designated by the use information in the record that corresponds to the region in which the element identified in the request is stored.

17. The apparatus of claim 1 wherein said data processor has a user mode of operation for executing nonprivileged instructions and a kernel mode of operation for executing nonprivileged and privileged instructions and said set of uses includes read and write, wherein said access information for each one of said regions is included in an access field in said record (400) that corresponds to said region, said access field comprising:
a first field position (404) enabling read access for said user mode;
a second field position (405) enabling write access for said user mode;
a third field position (402) enabling read access for said kernel mode; and
a fourth field position (403) enabling write access for said kernel mode.

18. The apparatus of claim 1 wherein said use information for each one of said regions is included in a use field in said record (400) that corresponds to said region, said use field comprising:
a first field position (407) for indicating a fault if said processor requests a write operation;
a second field position (406) for indicating a fault if said processor requests a read operation; and
a third field position (408) for indicating a fault if said processor requests an execute operation.

19. The apparatus of claim 1 wherein each said record (400) includes validity information (V) that indicates the presence of valid stored elements in the corresponding region in said memory.

20. A method for controlling access to and use of stored elements (312) by a processor (11) of the kind that requests said access by identifying one of said elements and indicating one of a set of uses for said one element, said method comprising:
providing a memory (15) that includes a plurality of regions each of which stores multiple said elements (312),
storing a plurality of records (304) each of which corresponds to one of said regions and includes:
access information (KRE,KWE,URE,UWE) that defines access rights to said one region, and
use information (FOR,FOW,FOE) that designates one or more of said set of uses for the elements stored in said one region,
and characterized by:
responding to one of said requests by using the record that corresponds to the region in which the element identified in the request is stored to:
selectively grant said processor (11) access to said region based on said access information, and
if said access is granted, regulate use of said element by said processor based on said use information and the use indicated in the request.

## Patentansprüche

1. Gerät zum Steuern eines Zugriffs auf gespeicherte Elemente (312) und einer Anwendung von ihnen durch einen Prozessor (11) der Art, die den Zugriff durch Identifizieren eines der Elemente und Anzeigen einer eines Satzes von Anwendungen für das eine Element nachfragt, wobei das Gerät folgendes aufweist:
einen Speicher (15), der eine Vielzahl von Bereichen enthält, von denen jeder viele der Elemente (312) speichert,
einen Speicher für eine Vielzahl von Aufzeichnungen (304), von denen jede einem der Bereiche entspricht und folgendes enthält:
eine Zugriffsinformation (KRE, KWE, URE, UWE), die Zugriffsrechte auf den einen Bereich definiert, und
eine Anwendungsinformation (FOR, FOW, FOE), die eine oder mehrere der Anwendungen des Satzes von Anwendungen für die in dem einen Bereich gespeicherten Elemente bestimmt,
gekennzeichnet durch:
eine Steuerung (303) zum Antworten auf eine der Anfragen durch Verwenden der Aufzeichnung (304), die dem Bereich entspricht, in dem das in der Anfrage identifizierte Element gespeichert ist, um:
dem Prozessor (11) basierend auf der Zugriffsinformation selektiv Zugriff auf den Bereich zu gewähren, und
wenn der Zugriff gewährt ist, eine Anwendung des Elementes durch den Prozessor basierend auf der Anwendungsinformation und der in der Anfrage angezeigten Anwendung zu regeln.

2. Gerät nach Anspruch 1, wobei der Prozessor (11) eine Vielzahl von Betriebsarten aufweist, wobei die Zugriffsinformation (KRE, KWE, URE, UWE) für jede der Arten definiert, ob dem Prozessor ein Zugriff auf den Bereich erlaubt ist, wobei die Steuerung geeignet ist, die Anfrage zu bestreiten und ein Zugriffsverbot (452) zu erzeugen, bis die Betriebsart des Prozessors eine ist, die die Information als eine Art definiert, für die ein Zugriff auf den Bereich erlaubt ist.

3. Gerät nach Anspruch 2, wobei die Steuerung geeignet ist, die Anfrage ungeachtet der Anwendung zu bestreiten, die in der Anfrage angezeigt ist, bis die Betriebsart des Prozessors eine ist, die die Information als eine Art definiert, für die ein Zugriff auf den Bereich erlaubt ist.

4. Gerät nach Anspruch 1, wobei die Anwendungsinformation (FOR, FOW, FOE) keine, einige oder alle der Anwendungen bestimmen kann, wobei die Steuerung geeignet ist, ein Ausnahmeprogramm hervorzurufen, wenn die Anwendung, die in der Anfrage angezeigt ist, unterschiedlich von der Anwendung ist, die durch die Anwendungsinformation bestimmt ist.

5. Gerät nach Anspruch 4, wobei das Ausnahmeprogramm veranlaßt, daß dem Prozessor die Anwendung bestritten wird, die in der Anfrage angezeigt ist.

6. Gerät nach Anspruch 4, wobei das Ausnahmeprogramm dem Prozessor erlaubt, die Anwendung durchzuführen, die in der Anfrage angezeigt ist, aber veranlaßt, daß ein Betriebssystem darüber informiert wird, daß die Anwendung, die in der Anfrage angezeigt ist, versucht worden ist.

7. Gerät nach Anspruch 1, wobei die Elemente unterschiedliche Typen von Elementen umfassen und die Anwendungsinformation (FOR, FOW, FOE) die eine oder die mehreren der Anwendungen des Satzes von Anwendungen basierend auf den Elementtypen bestimmt, wobei die Steuerung die Anwendung des Elementes, das in jeder der Anfragen identifiziert ist, durch selektives Gewähren oder Bestreiten der Anwendung, die in der Anfrage angezeigt ist, basierend auf dem Typ des identifizierten Elementes und der Anwendungsinformation regelt.

8. Gerät nach Anspruch 7, wobei die Typen von Elementen Datenelemente und Befehlselemente enthalten, wobei die Steuerung geeignet ist, die Anwendung zu bestreiten, die in der Anfrage angezeigt ist, wenn das Element, das in der Anfrage identifiziert ist, ein Befehlselement ist, bis die Anwendung, die in der Anfrage angezeigt ist, eine Ausführung ist.

9. Gerät nach Anspruch 1, wobei die Bereiche Seiten eines virtuellen Speichers umfassen.

10. Gerät nach Anspruch 9, wobei jede einzelne der Aufzeichnungen (304) einen Seitentabelleneintrag (400) für eine Seite umfaßt, der die Aufzeichnung entspricht, wobei die Zugriffsinformation (KRE, KWE, URE, UWE) und die Anwendungsinformation (FOR, FOW, FOE) in Feldern (402-408) des Seitentabelleneintrags (400) enthalten sind.

11. Gerät nach Anspruch 1, wobei der Prozessor (11) geeignet ist, selektiv in einem Benutzermodus oder einem Kernelmodus zu arbeiten, wobei die Zugriffsinformation (KRE, KWE, URE, UWE) die Zugriffsrechte für jeden einzelnen der Moden definiert, wobei die Steuerung den Zugriff zu den gespeicherten Elementen gemäß dem Modus, in dem der Prozessor arbeitet, und gemäß der Zugriffsinformation für den Modus selektiv gewährt.

12. Gerät nach Anspruch 1, wobei die gespeicherten Elemente Befehlselemente enthalten und eine der Anwendungen des Satzes von Anwendungen eine Ausführung ist, wobei die Steuerung geeignet ist, auf eine der Anfragen, die ein Befehlselement identifiziert, durch Verwenden der Anwendungsinformation zu antworten, um den Prozessor davon abzuhalten, das Befehlselement zu verwenden, bis die Anwendung, die in der Anfrage angezeigt ist, eine Ausführung ist.

13. Gerät nach Anspruch 1, wobei der Prozessor (11) eine Cache-Speichereinheit (27) enthält, wobei das Gerät weiterhin eine Adreß-Steuerung, die auf eine Adreßinformation in jeder der Aufzeichnungen antwortet, zum Adressieren von Elementen in der Cache-Speichereinheit aufweist.

14. Gerät nach Anspruch 1, wobei der Prozessor (11) eine Vielzahl virtueller Adressen (502) für die Elemente erzeugt, und eine erste Adreßraumzahl, die zu jeder der virtuellen Adressen gehört, wobei das Gerät weiterhin folgendes aufweist:
einen Umsetzungspuffer (506) zum Umsetzen der virtuellen Adressen in physikalische Adressen, wobei der Umsetzungspuffer eine zweite Adreßraumzahl aufweist, die jeder umzusetzenden virtuellen Adresse entspricht; und
einen Komparator, der für jede durch den Umsetzungspuffer umzusetzende virtuelle Adresse die erste Adreßraumzahl, die der virtuellen Adresse entspricht, mit der entsprechenden zweiten Adreßraumzahl in Antwort auf eine Adreßraumzahl-Information in der Aufzeichnung vergleicht, wobei der Umsetzungspuffer verwendet wird, um eine virtuelle Adresse nur dann umzusetzen, wenn der Komparator bestimmt, daß entsprechende erste und zweite Adreßraumzahlen identisch sind.

15. Gerät nach Anspruch 1, wobei die Aufzeichnung (400) eine Information (DCV) enthält, die identifiziert, ob die Elemente in dem Bereich, der der Aufzeichnung entspricht, in einem virtuellen Cache gespeichert werden können.

16. Gerät nach Anspruch 1, wobei die Steuerung geeignet ist, ein Betriebssystem zu informieren, wenn eine der Anfragen eine ausgewählte oder mehrere der Anwendungen des Satzes von Anwendungen anzeigt, die durch die Anwendungsinformation in der Aufzeichnung bestimmt sind, die dem Bereich entspricht, in dem das Element, das in der Anfrage identifiziert ist, gespeichert ist.

17. Gerät nach Anspruch 1, wobei der Datenprozessor einen Benutzer-Betriebsmodus zum Ausführen nichtprivilegierter Befehle und einen Kernel-Betriebsmodus zum Ausführen nichtprivilegierter und privilegierter Befehle aufweist, und wobei der Satz von Anwendungen ein Lesen und Schreiben enthält, wobei die Zugriffsinformation für jeden der Bereiche in einem Zugriffsfeld in der Aufzeichnung (400) enthalten ist, die dem Bereich entspricht, wobei das Zugriffsfeld folgendes aufweist:
eine erste Feldposition (404), die einen Lesezugriff für den Benutzermodus freigibt;
eine zweite Feldposition (405), die einen Schreibzugriff für den Benutzermodus freigibt;
eine dritte Feldposition (402), die einen Lesezugriff für den Kernel-Modus freigibt; und
eine vierte Feldposition (403), die einen Schreibzugriff für den Kernel-Modus freigibt.

18. Gerät nach Anspruch 1, wobei die Anwendungsinformation für jeden der Bereiche in einem Anwendungsfeld in der Aufzeichnung (400) enthalten ist, die dem Bereich entspricht, wobei das Anwendungsfeld folgendes aufweist:
eine erste Feldposition (407) zum Anzeigen eines Fehlers, wenn der Prozessor eine Schreiboperation anfragt;
eine zweite Feldposition (406) zum Anzeigen eines Fehlers, wenn der Prozessor eine Leseoperation anfragt; und
eine dritte Feldposition (408) zum Anzeigen eines Fehlers, wenn der Prozessors eine Ausführungsoperation anfragt.

19. Gerät nach Anspruch 1, wobei jede der Aufzeichnungen (400) eine Gültigkeitsinformation (V) enthält, die das Vorhandensein gültiger gespeicherter Elemente in dem entsprechenden Bereich in dem Speicher anzeigt.

20. Verfahren zum Steuern eines Zugriffs auf und einer Anwendung von gespeicherten Elementen (312) durch einen Prozessor (11) der Art, die den Zugriff durch Identifizieren eines der Elemente und Anzeigen einer eines Satzes von Anwendungen für das eine Element anfragt, wobei das Verfahren folgendes aufweist:
Vorsehen eines Speichers (15), der eine Vielzahl von Bereichen enthält, von denen jeder viele der Elemente (312) speichert,
Speichern einer Vielzahl von Aufzeichnungen (304), von denen jede einem der Bereiche entspricht und folgendes enthält:
eine Zugriffsinformation (KRE, KWE, URE, UWE), die Zugriffsrechte auf den einen Bereich definiert, und
eine Anwendungsinformation (FOR, FOW, FOE), die eine oder mehrere der Anwendungen des Satzes von Anwendungen für die in dem einen Bereich gespeicherten Elemente bestimmt,
und gekennzeichnet ist durch:
Antworten auf eine der Anfragen durch Verwenden der Aufzeichnung, die dem Bereich entspricht, in dem das Element, das in der Anfrage identifiziert ist, gespeichert ist, um:
dem Prozessor (11) basierend auf der Zugriffsinformation selektiv Zugriff auf den Bereich zu gewähren, und
wenn der Zugriff gewährt wird, eine Anwendung des Elementes durch den Prozessor basierend auf der Anwendungsinformation und der in der Anfrage angezeigten Anwendung zu regeln.

## Revendications

1. Appareil pour commander l'accès à des éléments emmagasinés (312) et leur utilisation par un processeur (11) du type qui sollicite ledit accès en identifiant l'un desdits éléments et en indiquant une utilisation parmi une série d'utilisations pour ledit élément, ledit appareil comprenant:
une mémoire (15) qui comprend une multiplicité de régions dont chacune emmagasine une multiplicité desdits éléments (312),
un stockage pour une multiplicité d'enregistrements (304) dont chacun correspond à l'une desdites régions et qui comprend:
des informations d'accès (KRE, KWE, URE, UWE) qui définissent les droits d'accès à ladite région, et
des informations d'utilisation (FOR, FOW, FOE) qui désignent une ou plusieurs utilisations de ladite série d'utilisations pour les éléments emmagasinés dans ladite région,
caractérisé par:
un contrôleur (303) servant à répondre à l'une desdites demandes en utilisant l'enregistrement (304) qui correspond à la région dans laquelle est emmagasiné l'élément identifié dans la demande pour:
accorder de façon sélective audit processeur (11) l'autorisation d'accéder à ladite région sur la base desdites informations d'accès, et
si ledit accès est autorisé, réguler l'utilisation dudit élément par ledit processeur sur la base desdites informations d'utilisation et de l'utilisation indiquée dans la demande.

2. Appareil selon la revendication 1, dans lequel ledit processeur (11) comporte une multiplicité de modes de fonctionnement, lesdites informations d'accès (KRE, KWE, URE, UWE) déterminant, pour chacun desdits modes, si ledit processeur est autorisé à accéder à ladite région, ledit contrôleur étant conçu pour refuser ladite demande et générer une violation d'accès (452) sauf si le mode de fonctionnement dudit processeur est un mode que lesdites informations définissent comme étant un mode pour lequel l'accès à ladite région est autorisé.

3. Appareil selon la revendication 2, dans lequel ledit contrôleur est conçu pour refuser ladite demande quelle que soit l'utilisation indiquée dans ladite demande sauf si le mode de fonctionnement dudit processeur est un mode que lesdites informations définissent comme étant un mode pour lequel l'accès à ladite région est autorisé.

4. Appareil selon la revendication 1, dans lequel lesdites informations d'utilisation (FOR, FOW, FOE) peuvent ne désigner aucune desdites utilisations, ou désigner certaines desdites utilisations ou toutes lesdites utilisations, ledit contrôleur étant conçu pour appeler un sous-programme d'exceptions si ladite utilisation indiquée dans la demande est différente de l'utilisation désignée par lesdites informations d'utilisation.

5. Appareil selon la revendication 4, dans lequel ledit sous-programme d'exceptions agit pour refuser audit processeur l'utilisation indiquée dans la demande.

6. Appareil selon la revendication 4, dans lequel ledit sous-programme d'exceptions autorise ledit processeur à exécuter l'utilisation indiquée dans la demande, mais fait en sorte qu'un système d'exploitation soit informé de la tentative d'exécution de ladite utilisation indiquée dans la demande.

7. Appareil selon la revendication 1, dans lequel lesdits éléments comprennent différents types d'éléments et lesdites informations d'utilisation (FOR, FOW, FOE) désignent ladite ou lesdites utilisation(s) de ladite série d'utilisations sur la base desdits types d'éléments, ledit contrôleur régulant ladite utilisation dudit élément identifié dans chaque dite demande en autorisant ou refusant de façon sélective l'utilisation indiquée dans la demande sur la base du type dudit élément identifié et desdites informations d'utilisation.

8. Appareil selon la revendication 7, dans lequel lesdits types d'éléments comprennent des éléments de données et des éléments d'instruction, ledit contrôleur étant conçu pour refuser l'utilisation indiquée dans la demande si l'élément identifié dans la demande est un élément d'instruction sauf si l'utilisation indiquée dans la demande est l'exécution.

9. Appareil selon la revendication 1, dans lequel lesdites régions se composent de pages d'une mémoire virtuelle.

10. Appareil selon la revendication 9, dans lequel chacun desdits enregistrements (304) comprend une entrée de table de page (400) pour une page à laquelle ledit enregistrement correspond, lesdites informations d'accès (KRE, KWE, URE, UWE) et lesdites informations d'utilisation (FOR, FOW, FOE) étant comprises dans des zones (402 à 408) de ladite entrée de table de page (400).

11. Appareil selon la revendication 1, dans lequel ledit processeur (11) est conçu pour fonctionner de façon sélective dans un mode utilisateur ou dans un mode noyau, lesdites informations d'accès (KRE, KWE, URE, UWE) définissant lesdits droits d'accès pour chacun desdits modes, ledit contrôleur autorisant de façon sélective ledit accès auxdits éléments emmagasinés en fonction du mode dans lequel le processeur fonctionne et desdites informations d'accès pour ledit mode.

12. Appareil selon la revendication 1, dans lequel lesdits éléments emmagasinés comprennent des éléments d'instruction et l'une des utilisations de ladite série d'utilisations est l'exécution, ledit contrôleur étant conçu pour répondre à l'une desdites demandes qui identifie un élément d'instruction en utilisant lesdites informations d'utilisation pour empêcher ledit processeur d'utiliser ledit élément d'instruction sauf si l'utilisation indiquée dans ladite demande est l'exécution.

13. Appareil selon la revendication 1, dans lequel ledit processeur (11) comporte une unité d'antémémoire (27), ledit appareil comprenant, en outre, un contrôleur d'adresses qui réagit auxdites informations d'adresse de chacun desdits enregistrements pour l'adressage des éléments dans l'unité d'antémémoire.

14. Appareil selon la revendication 1, dans lequel ledit processeur (11) génère une multiplicité d'adresses virtuelles (502) pour lesdits éléments et un premier numéro d'espace d'adressage associé à chacune desdites adresses virtuelles, ledit appareil comprenant, en outre:
un tampon de translation (506) pour translater lesdites adresses virtuelles en adresses physiques, ledit tampon de translation ayant un second numéro d'espace d'adressage correspondant à chaque adresse virtuelle à translater; et
un comparateur qui compare, pour chaque adresse virtuelle à translater par ledit tampon de translation, ledit premier numéro d'espace d'adressage correspondant à ladite adresse virtuelle audit second numéro d'espace d'adressage correspondant en réponse aux informations de numéro d'espace d'adressage contenues dans ledit enregistrement, ledit tampon de translation étant utilisé pour translater une adresse virtuelle uniquement si ledit comparateur établit que les premier et second numéros d'espace d'adressage correspondants sont identiques.

15. Appareil selon la revendication 1, dans lequel ledit enregistrement (400) comprend des informations (DCV) qui indiquent si les éléments contenus dans la région correspondant audit enregistrement peuvent être emmagasinés dans une antémémoire virtuelle.

16. Appareil selon la revendication 1, dans lequel ledit contrôleur est conçu pour avertir un système d'exploitation si l'une desdites demandes indique une ou plusieurs utilisation(s) sélectionnee(s) de ladite série d'utilisations désignées par les informations d'utilisation dans l'enregistrement qui correspond à la région dans laquelle l'élément identifié dans la demande est emmagasiné.

17. Appareil selon la revendication 1, dans lequel ledit processeur de données comporte un mode de fonctionnement utilisateur pour exécuter des instructions non privilégiées et un mode de fonctionnement noyau pour exécuter des instructions non privilégiées et privilégiées, et ladite série d'utilisations comprend la lecture et l'écriture, lesdites informations d'accès pour chacune desdites régions étant comprises dans une zone d'accès dudit enregistrement (400) qui correspond à ladite région, ladite zone d'accès comprenant:
un premier emplacement de zone (404) validant l'accès lecture pour ledit mode utilisateur;
un second emplacement de zone (405) validant l'accès écriture pour ledit mode utilisateur;
un troisième emplacement de zone (402) validant l'accès lecture pour ledit mode noyau; et
un quatrième emplacement de zone (403) validant l'accès écriture pour ledit mode noyau.

18. Appareil selon la revendication 1, dans lequel lesdites informations d'utilisation pour chacune desdites régions sont contenues dans une zone d'utilisation dudit enregistrement (400) qui correspond à ladite région, ladite zone d'utilisation comprenant:
un premier emplacement de zone (407) pour indiquer une erreur si ledit processeur demande une opération d'écriture;
un second emplacement de zone (406) pour indiquer une erreur si ledit processeur demande une opération de lecture; et
un troisième emplacement de zone (408) pour indiquer une erreur si ledit processeur demande une opération d'exécution.

19. Appareil selon la revendication 1, dans lequel chacun desdits enregistrements (400) comporte des informations de validité (V) qui indiquent la présence d'éléments emmagasinés valides dans la région correspondante de ladite mémoire.

20. Procédé pour commander l'accès à des éléments emmagasinés (312) et leur utilisation par un processeur (11) du type qui sollicite ledit accès en identifiant l'un desdits éléments et en indiquant une utilisation parmi une série d'utilisations pour ledit élément, ledit procédé consistant:
à prévoir une mémoire (15) qui comprend une multiplicité de régions dont chacune emmagasine une multiplicité desdits éléments (312),
à stocker une multiplicité d'enregistrements (304) dont chacun correspond à l'une desdites régions et comprend:
des informations d'accès (KRE, KWE, URE, UWE) qui définissent les droits d'accès à ladite région, et
des informations d'utilisation (FOR, FOW, FOE) qui désignent une ou plusieurs utilisation(s) de ladite série d'utilisations pour les éléments emmagasinés dans ladite région,
et caractérisé par le fait de:
répondre à l'une desdites demandes en utilisant l'enregistrement qui correspond à la région dans laquelle est emmagasiné l'élément identifié dans la demande pour:
accorder de façon sélective audit processeur (11) l'autorisation d'accéder à ladite région sur la base desdites informations d'accès, et
si ledit accès est autorisé, réguler l'utilisation dudit élément par ledit processeur sur la base desdites informations d'utilisation et de l'utilisation indiquée dans la demande.
